# EUROPÄISCHE PATENTSCHRIFT

(11) **EP 0 524 388 B1**
(45) Veröffentlichungstag und Bekanntmachung des Hinweises auf die Patenterteilung: **15.02.1995**
(21) Anmeldenummer: 92107931.5
(22) Anmeldetag: 12.05.1992
(51) Int. Cl.: E06B 9/24, E04F 10/10, G02B 5/32, E06B 3/00, E04C 2/54, H01L 31/052

(54) **Tageslicht-Beleuchtungsvorrichtung**
Natural light device
Dispositif d'éclairage naturel

(30) Priorität: 25.05.1991 DE 4117146
(43) Veröffentlichungstag der Anmeldung: 27.01.1993
(73) Patentinhaber: Müller, Helmut Frank Ottomar, Prof. Dr.-Ing., D-50933 Köln (DE)
(72) Erfinder: Müller, Helmut Frank Ottomar, Prof. Dr., D-50933 Köln (DE); Gutjahr, Jörg, Prof. Dr., D-51588 Nümbrecht (DE)
(74) Vertreter: Selting, Günther, Dipl.-Ing.

(56) Entgegenhaltungen:
- EP-A- 0 400 367
- DE-A- 2 615 379
- DE-A- 3 840 262
- GB-A- 2 176 226
- US-A- 4 351 588
- US-A- 4 412 719

## Beschreibung

Die Erfindung betrifft eine Tageslicht-Beleuchtungsvorrichtung und insbesondere ein Außenwandelement, Fenster oder Oberlicht für ein Gebäude.

Bei der üblichen Tageslicht-Beleuchtung von Räumen tritt bei Sonnenlicht das gerichtete parallele Licht entsprechend dem jeweiligen Einstrahlungswinkel durch das Fenster hindurch in den Raum ein, wobei selektive Bereiche des Raumes sehr stark beleuchtet werden, während andere Bereiche abgeschattet sind. Besonders die weit vom Fenster entfernten Bereiche sind im allgemeinen relativ zu dem fensternahen Bereich dunkel. Die Tageslicht-Beleuchtung des Raumes hängt somit sehr stark von dem wechselnden Sonnenstand ab sowie davon, ob die Sonne scheint oder ob das Tageslicht diffus ist.

DE 38 40 262 A1 beschreibt ein transparentes Wandelement für Gebäude, bei dem eine Scheibe mit einem holographischen Beugungsgitter versehen ist. Dabei wird die Eigenschaft von Hologrammen genutzt, einfallendes Licht richtungsselektiv abzulenken. Die Hologramme sind derart ausgebildet, daß sie das schräg von oben einfallende Tageslicht in die Raumtiefe hineinlenken, so daß der Raum in seiner gesamten Tiefe ausgeleuchtet wird.

Diese Ausleuchtung mit im wesentlichen horizontal gerichtetem Licht bewirkt jedoch auf Schreibtischen u.dgl. Schattenbildungen. Außerdem wird der horizontale Einfallswinkel des Sonnenlichts nicht berücksichtigt, wodurch Sonnenlicht, das in vertikaler Projektion, also in Projektion auf eine horizontale Ebene, schräg einfällt, vornehmlich auf eine der beiden auf das Fenster zulaufenden Raumwände gerichtet wird, während die gegenüberliegende Raumwand in einem Abschattungsbereich liegt. Eine derartige Lichtlenkvorrichtung arbeitet somit nur dann zufriedenstellend, wenn das Sonnenlicht unter einem senkrechten Azimutwinkel auf die Scheibe trifft.

Die Erfindung befaßt sich mit dem Problem, das Tageslicht derart in ein Gebäude einzuleiten, daß unabhängig vom Sonnenstand, d.h. unabhängig vom Höhenwinkel und vom Azimutwinkel der Sonne, stets eine gute Raumausleuchtung gewährleistet ist.

Die Lösung dieses Problems erfolgt erfindungsgemäß mit den im Patentanspruch 1 angegebenen Merkmalen.

Bei der erfindungsgemäßen Tageslicht-Beleuchtungsvorrichtung sind die auf der Scheibe angebrachten Lichtlenkenden Hologramme derart ausgebildet, daß sie aus einem horizontalen Einfalls-Winkelbereich einfallendes Licht auf einen schmaleren horizontalen Ausfalls-Winkelbereich konzentrieren. Zusätzlich sind Lichtleitelemente vorhanden, die eine Höhenablenkung des einfallenden Lichts bewirken. Dadurch werden die Lichtlenkung in horizontaler Richtung und die Lichtlenkung in vertikaler Richtung von getrennten Lichtleitelementen durchgeführt. Die Hologramme bewirken, daß das Licht unabhängig von dem jeweiligen Azimutwinkel der Sonne stets auf den engeren horizontalen Ausfalls-Winkelbereich konzentriert wird. Die dahinter oder davor angeordneten weiteren Lichtleitelemente bewirken dagegen eine vertikale Lichtlenkung für die Ausleuchtung der Tiefe des Raumes. Durch diese Aufteilung zwischen horizontaler und vertikaler Lichtlenkung wird auf einfache Weise eine weitgehend gleichmäßige Raumausleuchtung erreicht.

Die die vertikale Lichtlenkung bewirkenden Lichtleitelemente sind vorzugsweise so ausgerichtet, daß das schräg von oben her einfallende Licht mit schräg nach oben gerichteter Hauptrichtung gegen die Raumdecke reflektiert wird. Von der Raumdecke wird das Licht wiederum nach unten geworfen, so daß der Raum von der Decke her Licht empfängt.

Als Tageslicht-Beleuchtungsvorrichtung kann beispielsweise ein Fenster oder eine Fensterpartie des Gebäudes dienen, wobei die Scheibe entweder senkrecht oder schräg ausgerichtet ist. Es ist aber auch möglich, ein Glasdach in der erfindungsgemäßen Weise auszubilden, um beispielsweise Tageslicht senkrecht in die Tiefe eines Lichtschachts hineinzuleiten.

Die weiteren Lichtleitelemente, die die vertikale Lichtablenkung bewirken, können verstellbare Lamellen sein. Es ist auch möglich, hierfür ebenfalls Hologramme zu verwenden, die entweder auf derselben Scheibe oder auf einer zweiten Scheibe angebracht sind.

Die Tageslicht-Beleuchtungsvorrichtung kann so ausgebildet sein, daß sie eine gleichmäßige Raumausleuchtung sowohl bei gerichtetem Sonnenlicht als auch bei diffusem Licht (bei bedecktem Himmel) ermöglicht. Zweckmäßigerweise ist sie in mindestens zwei Bereiche unterteilt, von denen der eine Bereich Hologramme für die horizontale Lichtlenkung und weitere Lichtleitelemente für die vertikale Lichtlenkung aufweist, während ein anderer Bereich lediglich Lichtleitelemente für die vertikale Lichtlenkung aufweist. Der erste Bereich dient hierbei zum Einleiten des Sonnenlichts, während der zweite Bereich ausschließlich für diffuses Licht bestimmt ist und bei Sonnenlicht abgeschattet wird. Dadurch wird dem Umstand Rechnung getragen, daß bei Sonneneinstrahlung die in den Raum eingeleitete Strahlungsmenge begrenzt werden muß, um eine übermäßige Raumaufheizung zu vermeiden.

Vorzugsweise sind die Hologramme und/oder die Lichtleitelemente so ausgebildet, daß sie als paralleles Licht einfallende Sonnenstrahlung zu nicht-parallelem austretenden Licht streuen, um Blendwirkung zu vermeiden. Obwohl die Hologramme und/oder die Lichtleitelemente das austretende Licht streuen, haben sie vorzugsweise die Wirkung, daß sie das Licht mit einer vom Sonnenstand unabhängigen Vorzugsrichtung austreten lassen. Um diese Wirkung in Azimutrichtung zu erzeugen, können spezielle Hologramme in Form von Zonenplatten benutzt werden. Eine vom Sonnenstand unabhängige Vorzugsrichtung in vertikaler Ebene kann man mit Lichtleitern erhalten, die jegliche Strahlung, die aus einem Akzeptanzbereich einfällt, in einen Streubereich mit fester Vorzugsrichtung austreten lassen. Die lichtstreuende Wirkung der Lichtleitelemente kann ferner erzeugt werden, indem die Lichtleitelemente beispielsweise als gewölbte reflektierende Lamellen ausgebildet sind.

Die Erzeugung von Hologrammen, die für die Lichtlenkung geeignet sind, ist in DE 38 40 262 A1 erläutert. Diese Schrift wird ausdrücklich zum Offenbarungsinhalt der vorliegenden Beschreibung gemacht, so daß die Technik der Hologrammerzeugung hier nicht näher erläutert wird. Anstelle dieser Art der Hologrammanwendung, bei der reguläre Beugungsgitter entstehen, wird vorzugsweise die Hologrammerzeugung derart vorgenommen, daß durch Überlagerung eines Strahls mit ebener Welle und eines Strahls mit kugelförmiger oder zylinderförmiger Welle eine Zonenplatte entsteht. Ferner können die Hologramme als Zylinder-Zonenplatten auch durch Überlagerung mehrerer, z.B. sieben, zylinderförmiger Wellen erzeugt werden.

Im folgenden werden unter Bezugnahme auf die Zeichnungen Ausführungsbeispiele der Erfindung näher erläutert.

Es zeigen:
- Fig. 1: einen Vertikalschnitt eines Gebäudes, das mit einem lichtdurchlässigen Außenwandelement abgeschlossen ist,
- Fig. 2: eine Frontansicht des Außenwandelementes,
- Fig. 3: einen Horizontalschnitt durch das Außenwandelement,
- Fig. 4: einen Vertikalschnitt durch das Außenwandelement bei Sonneneinstrahlung,
- Fig. 5: einen Vertikalschnitt durch das Außenwandelement bei diffusem Lichteinfall,
- Fig. 6: eine weitere Ausführungsform des Außenwandelements,
- Fig. 7: das lichttechnische Zusammenwirken des Außenwandelements mit einer mit Schrägflächen versehenen Raumdecke,
- Fig. 8: einen Vertikalschnitt durch eine andere Ausführungsform des Außenwandelements, bei dem die Lichtleitelemente aus lichtleitenden Körpern bestehen und
- Fig. 9: eine Darstellung eines der lichtleitenden Körper nach Fig. 8.

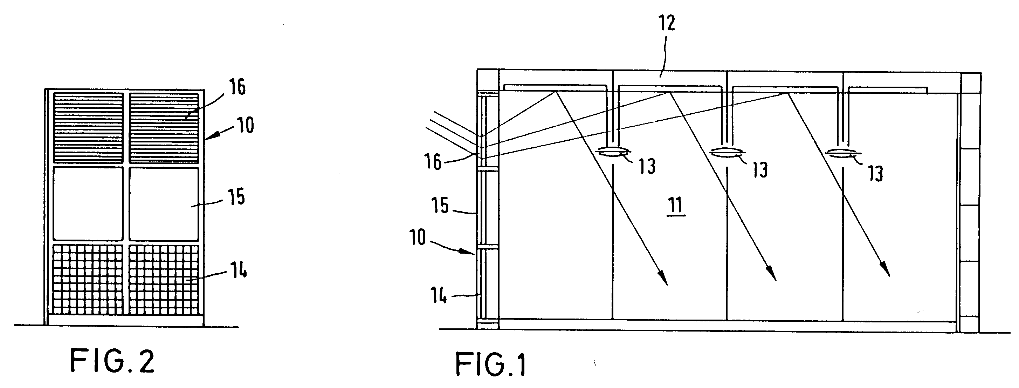

In den Fign. 1 und 2 ist ein Außenwandelement 10 eines Gebäudes dargestellt. Das Außenwandelement 10 bildet den Abschluß eines Raumes 11, der eine Decke 12 mit gerichtet reflektierender Oberfläche aufweist. Zur künstlichen Beleuchtung sind abgependelte Leuchten 13 vorgesehen, die direkt den Arbeitsplatz beleuchten und gleichzeitig indirekt die Decke anstrahlen, um eine dem Tageslicht vergleichbare Lichtverteilung im Raum zu erzielen.

Das Außenwandelement 10 enthält in seinem unteren Bereich eine lichtundurchlässige Brüstung 14 und darüber durchsichtige Sichtfenster 15 aus Glas. Über den Sichtfenstern 15 befindet sich die erfindungsgemäße Lichtdurchlaßvorrichtung 16, die zwar Licht durchläßt, jedoch nicht durchsichtig ist.

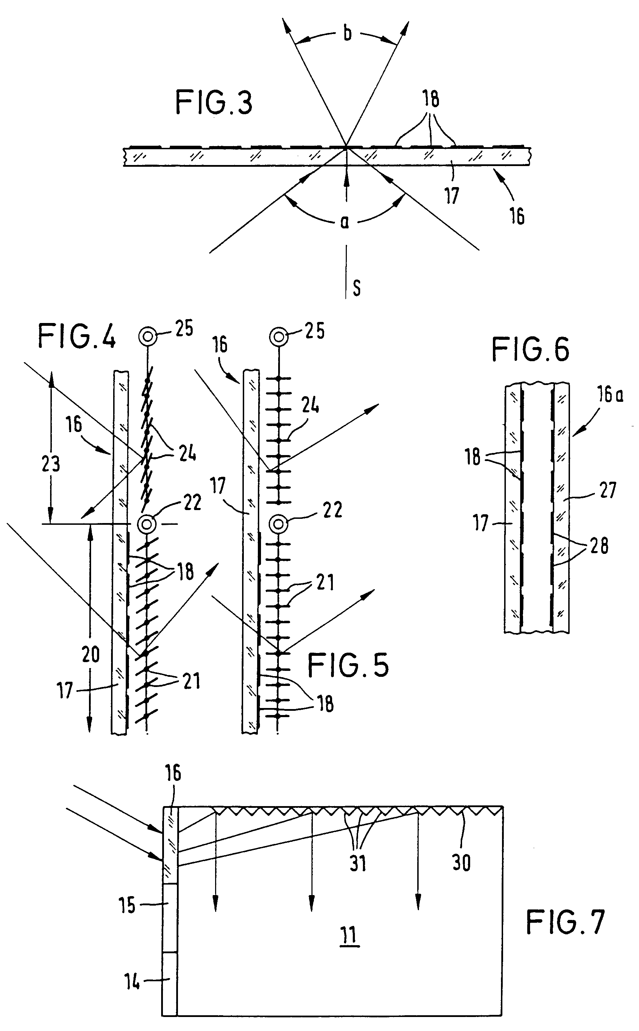

In Fig. 3 ist ein Horizontalschnitt durch einen Teil der Lichtdurchlaßvorrichtung 16 dargestellt. Die Lichtdurchlaßvorrichtung 16 weist eine Glasscheibe 17 auf, an deren dem Raum 11 zugewandter Seite sich zahlreiche Hologramme 18 befinden. Die Hologramme sind jeweils Quadrate von etwa 2,5 cm Kantenlänge. Diese Hologramme, die nach Art eines Schachbrettmusters angeordnet sind und die gesamte Fläche der Scheibe 17 bedecken, sind so ausgebildet, daß sie Licht, das aus einem horizontalen Einfalls-Winkelbereich a einfällt, in einen schmaleren horizontalen Ausfalls-Winkelbereich b fächerartig gestreut austreten lassen. Fig. 3 zeigt die einfallenden und ausfallenden Lichtstrahlen in Projektion auf eine horizontale Ebene. Mit S ist die Südrichtung bezeichnet. Bei dem dargestellten Ausführungsbeispiel verläuft die Scheibe 17 exakt rechtwinklig zur Nord-Süd-Achse, so daß die Südrichtung die Winkelhalbierende des Einfalls-Winkelbereichs a darstellt. Licht, das aus unterschiedlichen Azimutwinkeln (Horizontalwinkeln) einfällt, wird auf den Ausfalls-Winkelbereich b konzentriert. Die hierzu geeigneten Hologramme 18 sind Transmissions-Hologramme, die auf bekannte Art erzeugt werden können.

Die Darstellung in Fig. 3 berücksichtigt ausschließlich den jeweiligen Azimutwinkel der Sonne, jedoch nicht den Höhenwinkel. Wären nur die Hologramme 18 vorhanden, dann würde das Licht zwar mit einer Hauptrichtung gebündelt, die senkrecht zur Scheibe 17 verläuft, jedoch wäre der Lichteinfall in den Raum abhängig von der Höhe des Sonnenstandes.

Um den Einfluß des Höhenwinkels des Lichteinfalls zu eliminieren, sind gemäß Fig. 4 in einem ersten Bereich 20 der Lichtleitvorrichtung 16 hinter der mit den Hologrammen 18 versehenen Scheibe 17 Lichtleitelemente 21 vorgesehen, die eine Lichtlenkung in vertikaler Richtung bewirken. Die Lichtleitelemente 21 bestehen hier aus zahlreichen horizontalen Lamellen, deren Schrägstellung synchron von einem Motor 22 entsprechend dem Höhenwinkel der Sonne gesteuert werden kann. Auf diese Weise wird schräg von oben her einfallendes Licht, das die Hologramme 18 passiert hat, von den Lichtleitelementen 21 mit schräg nach oben weisender Hauptrichtung in den Raum 11 geleitet.

Durch die Kombination der Hologramme 18 mit den Lichtleitelementen 21 wird erreicht, daß das Licht unabhängig vom Azimutwinkel und vom Höhenwinkel der Sonne stets unter im wesentlichen gleichen Verhältnissen in den Raum eingeleitet wird.

Über dem Bereich 20, der vornehmlich zum Einleiten des gerichteten Sonnenlichts in den Raum bestimmt ist, befindet sich der Bereich 23, der einen Ergänzungsbereich für Streulichteinfall darstellt. Bei Streulicht ist der Lichteinfall in horizontaler Ebene für alle Azimutwinkel etwa gleich, so daß keine horizontale Lichtlenkung erforderlich ist. Demnach sind im Bereich 23 hinter der Scheibe 17 keine Hologramme 18 vorgesehen. Streulicht fällt generell mit senkrecht nach unten gerichteter Haupteinfallsrichtung ein, jedoch wird diese Haupteinfallsrichtung durch die Brechungswirkung der Scheibe 17 auf einen Winkel von etwa 60° zur Horizontalen verändert. Im Bereich 23 sind hinter der Scheibe 17 Lichtleitelemente 24 angeordnet, die in gleicher Weise ausgebildet sind wie die Lichtleitelemente 21. Die Lichtleitelemente 24 werden von dem Motor 25 gesteuert. Bei Sonnenlicht werden die Lichtleitelemente 24 gemäß Fig. 4 in die Schließstellung gebracht, in der das Sonnenlicht nach außen reflektiert wird. Bei bedecktem Himmel, also bei Streulicht, werden die Lichtleitelemente 24 in eine Öffnungsstellung gebracht, wobei sie nahezu horizontal eingestellt werden, so daß schräg von oben her einfallendes Licht schräg nach oben in den Raum hinein reflektiert wird. Außerdem sind gemäß Fig. 5 die unteren Lichtleitelemente 21 offen. Bei diffusem Lichteinfall sind daher beide Bereiche 20 und 23 der Lichtdurchlaßvorrichtung 16 lichtdurchlässig, wobei das Licht von beiden Bereichen gegen die Raumdecke gelenkt wird.

Fig. 6 zeigt eine andere Ausführungsform der Lichtdurchlaßvorrichtung 16a. Wie beim ersten Beispiel sind hier an der Innenseite der Scheibe 17 Hologramme 18 für die horizontale Lichtlenkung angebracht. An einer weiteren Scheibe 27 sind weitere Hologramme 28 als Transmissionshologramme für die vertikale Lichtlenkung vorgesehen. Die Hologramme 28 haben hier dieselbe Funktion wie die Lichtleitelemente 21 des ersten Ausführungsbeispieles. Gemäß Fig. 6 sind die Hologramme an zwei verschiedenen Scheiben 17 und 27 angebracht. Es ist auch möglich, die Hologramme 18 und 28 an derselben Scheibe entweder auf unterschiedlichen Seiten der Scheibe oder sogar auf derselben Scheibenseite vorzusehen.

Die Hologramme 18 und 28 bestehen jeweils aus mindestens zwei einander überlagernden regulären (unmodulierten) Hologrammen, die Transmissionsgitter für unterschiedliche Wellenlängen bilden, so daß keine Spektralzerlegung erfolgt.

Fig. 7 zeigt die Ausbildung der Decke 30 des Raums 11, auf die die Lichtstrahlen nach dem Passieren der Lichtdurchlaßvorrichtung 16 gerichtet werden. Die Decke 30 besteht hier aus zahlreichen reflektierenden Schrägflächen 31, die nach Art einer Sägezahnstruktur angeordnet sind und die einen derartigen Neigungswinkel haben, daß das von der Lichtdurchlaßvorrichtung 16 kommende Licht im wesentlichen schräg nach unten reflektiert wird.

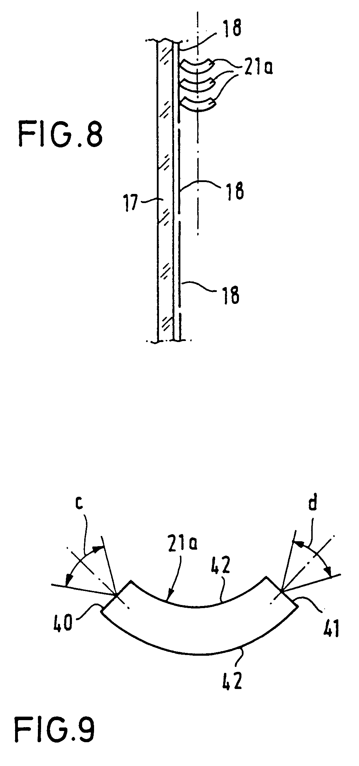

Bei dem Ausführungsbeispiel der Fign. 8 und 9 ist eine Glasscheibe 17 vorgesehen, auf der sich zahlreiche Hologramme 18 befinden. Auf der Raumseite, also in Einfallsrichtung des Sonnenlichts hinter den Hologrammen, sind zahlreiche lichtleitende Elemente 21a in Form von Lichtleiterkörpern angeordnet. Diese Lichtleitelemente 21a sind bogenförmig gestaltet, wobei ihre Lichteinlaßfläche 40 entsprechend einer mittleren Sonnenhöhe schräg nach oben gerichtet ist. Die Lichtauslaßfläche 41 ist ebenfalls schräg nach oben gerichtet, also zur Raumdecke hin. Die Lichtleiterkörper 21a bestehen aus lichtleitenden Fasern oder lichtleitenden Platten, die an ihren längslaufenden Wänden 42 innen totalreflektierend ausgebildet sind und aus lichtleitendem Vollmaterial bestehen. In die Lichtleiterkörper 21 kann Licht nur an den Stirnseiten eindringen, die von der Lichteinlaßfläche 40 und der Lichtauslaßfläche 41 gebildet werden. Entsprechend dem Winkel der Totalreflektion an den Seitenwänden 42 hat der Lichtleiterkörper 21a an seiner Lichteinlaßfläche 40 einen Akzeptanzwinkel c, dessen Winkelhalbierende von der Normalen auf die Lichteinlaßfläche 40 gebildet wird. Licht, das innerhalb des Akzeptanzwinkels c einfällt, wird im Innern des Lichtleiterkörpers 21a durch mehrfach Reflektion weitergeleitet und gelangt zur Lichtaustrittsfläche 41. Licht, das außerhalb des Akzeptanzwinkels c einfällt, wird absorbiert. Der Lichtleiterkörper 21a hat ferner die Wirkung, daß jeglicher Lichtstrahl, der innerhalb des Akzeptanzwinkels c einfällt, aus der Austrittsfläche 41 in einem Streuwinkel d austritt. Jeder einzelne in den Lichtleiterkörper eintretende Strahl wird also an der Lichtaustrittsfläche 41 im Streuwinkelbereich d gestreut.

Während die Hologramme 18 die Wirkung haben, daß sie den Azimutwinkel, unter dem das Sonnenlicht einfällt, in einen kleineren Austrittswinkel umsetzen, haben die Lichtleitkörper 21a die Wirkung, daß sie Sonnenlicht, das aus einer dem Akzeptanzwinkel c entsprechenden Höhe einfällt, mit einer vom Sonnenstand unabhängigen Vorzugsrichtung abstrahlen, nämlich stets in Richtung der Normalen zur Lichtaustrittsfläche 41. Dieses Sonnenlicht wird unabhängig von der Sonnenhöhe stets in dem Bereich des Streuwinkels d gestreut. Auf diese Weise entsteht eine vom Azimutwinkel und vom Höhenwinkel der Sonne unabhängige gleichmäßige Raumausleuchtung.

Die Lichtleiterkörper 21a in Fig. 8 sind in dichter vertikaler Folge, also mit geringen vertikalen Abständen angeordnet, so daß die Fensterfläche im wesentlichen bedecken.

## Patentansprüche

1. Tageslicht-Beleuchtungsvorrichtung mit einer lichtdurchlässigen Scheibe (17), die lichtlenkende Hologramme (18) trägt,
**dadurch gekennzeichnet,** daß die Hologramme (18) derart ausgebildet sind, daß sie aus einem horizontalen Einfalls-Winkelbereich (a) einfallendes Licht auf einen schmaleren horizontalen Ausfalls-Winkelbereich (b) konzentrieren, und daß die Hologramme (18) von Lichtleitelementen (21) bedeckt sind, die eine Höhenablenkung des einfallenden Lichts bewirken.

2. Tageslicht-Beleuchtungsvorrichtung nach Anspruch 1, dadurch gekennzeichnet, daß die Lichtleitelemente (21) aus Lamellen mit verstellbarem Neigungswinkel bestehen.

3. Tageslicht-Beleuchtungsvorrichtung nach Anspruch 1, dadurch gekennzeichnet, daß die Lichtleitelemente aus weiteren Hologrammen (28) bestehen.

4. Tageslicht-Beleuchtungsvorrichtung nach einem der Ansprüche 1-3, dadurch gekennzeichnet, daß die Scheibe (17) Teil eines Außenwandelementes (10) eines Gebäudes ist und daß das Außenwandelement außer dem mit Hologrammen (18) versehenen Bereich (20) ein Sichtfenster (15) aufweist.

5. Tageslicht-Beleuchtungsvorrichtung nach einem der Ansprüche 1-4, dadurch gekennzeichnet, daß die Scheibe (17) Teil eines Außenwandelements (10) eines Gebäudes ist und daß das Außenwandelement außer dem mit Hologrammen (18) versehenen Bereich (20) einen zweiten Lichtdurchlaßbereich (23) für diffuses Licht aufweist, der nur mit Lichtleitelementen (24) zur Höhenablenkung versehen ist.

6. Tageslicht-Beleuchtungsvorrichtung nach einem der Ansprüche 1-5, dadurch gekennzeichnet, daß die Lichtleitelemente (21) derart gesteuert sind, daß sie bei diffus einfallendem Licht auf einen festen Winkel eingestellt werden, derart, daß sie einfallendes Licht schräg nach oben leiten.

7. Tageslicht-Beleuchtungsvorrichtung nach einem der Ansprüche 1-6, dadurch gekennzeichnet, daß ein durch die Scheibe (17) hindurch beleuchteter Raum (11) eine Decke (30) mit schrägen Reflexionsflächen (31) hat, die das von den Lichtleitelementen (21,24) empfangene Licht im wesentlichen senkrecht reflektieren.

8. Tageslicht-Beleuchtungsvorrichtung nach einem der Ansprüche 1-7, dadurch gekennzeichnet, daß die Hologramme (18) aus Zonenplatten bestehen, die durch Überlagerung eines Strahles mit ebener Welle und eines Strahles mit kugelförmiger oder zylinderförmiger Welle entstanden sind.

9. Tageslicht-Beleuchtungsvorrichtung nach einem der Ansprüche 1-7, dadurch gekennzeichnet, daß die Hologramme (18) Zylinder-Zonenplatten sind, die durch Überlagerung mehrerer unter unterschiedlichen Winkeln auftreffender zylinderförmiger Wellen entstanden sind.

10. Tageslicht-Beleuchtungsvorrichtung nach einem der Ansprüche 1-7, dadurch gekennzeichnet, daß die Lichtleitelemente lichtstreuend ausgebildet sind.

11. Tageslicht-Beleuchtungsvorrichtung nach Anspruch 10, dadurch gekennzeichnet, daß die Lichtleitelemente bogenförmige Lichtleiterkörper (21a) sind, deren rechtwinklig zu den Seitenwänden (42) verlaufende Lichteintrittsfläche (40) und Lichtaustrittsfläche (41) unter einem von Null verschiedenen Winkel zueinander verlaufen.

## Claims

1. A daylight lighting device comprising a translucent pane (17) with light deflecting holograms (18) thereon,
characterised in
that said holograms (18) are formed such that light incident from within a horizontal incident angle range (a) is focussed thereby onto a narrower exit angle range (b), and that said holograms (18) are covered by light guiding elements (21) causing a height deflection of the incident light.

2. The daylight lighting device of claim 1, characterised in that said light guiding elements (21) consist of lamellae with adjustable angles of inclination.

3. The daylight lighting device of claim 1, characterised in that said light guiding elements consist of further holograms (28).

4. The daylight lighting device of one of claims 1-3, characterised in that said pane (17) is part of an exterior wall element (10) of a building, and that, besides the portion (20) provided with said holograms (18), said exterior wall element further has a window (15).

5. The daylight lighting device of one of claims 1-4, characterised in that said pane (17) is part of an exterior wall element (10) of a building, and that, besides the portion (20) provided with said holograms (18), said exterior wall element further has a second light transmitting portion (23) for diffuse light which is covered only with light guiding elements (24) for height deflection.

6. The daylight lighting device of one of claims 1-5, characterised in that said light guiding elements (21) are controlled such that they are set to a fixed angle at diffuse incident light such that they guide incident light upward obliquely.

7. The daylight lighting device of one of claims 1-6, characterised in that a room (11) lighted through said pane (17) has a ceiling (30) with inclined reflecting surfaces (31) reflecting the light received from said light guiding elements (21, 24) in a substantially perpendicular direction.

8. The daylight lighting device of one of claims 1-7, characterised in that said holograms (18) consist of zone plates obtained by superposing a beam with a plane wave and a beam with a ball-shaped or a cylindrical wave.

9. The daylight lighting device of one of claims 1-7, characterised in that said holograms (18) are cylindrical zone plates obtained by superposing a plurality of cylindrical waves impinging at different angles, respectively.

10. The daylight lighting device of one of claims 1-7, characterised in that said light guiding elements are light-scattering.

11. The daylight lighting device of claim 10, characterised in that said light guiding elements are arcuate light guiding members (21a), the light entrance surface (40) and the light exit surface (41) of which extend at right angles to the side walls (42) and at an angle other than 0 with respect to each other.

## Revendications

1. Dispositif d'éclairage naturel, avec une plaque translucide (17) qui porte des hologrammes (18) dirigeant la lumière,
caractérisé en ce que les hologrammes (18) se présentent de telle manière qu'ils concentrent la lumière incidente d'une zone d'angle d'incidence horizontale (a) sur une zone d'angle de sortie horizontale (b) plus étroite et que les hologrammes (18) sont recouverts d'éléments guides de lumière (21) qui entraînent une déviation en hauteur de la lumière incidente.

2. Dispositif d'éclairage naturel selon la revendication 1, caractérisé par le fait que les éléments photoconducteurs (21) consistent en des lamelles à angle d'inclinaison réglable.

3. Dispositif d'éclairage naturel selon la revendication 1, caractérisé par le fait que les éléments guides de lumière (21) consistent en d'autres hologrammes (28).

4. Dispositif d'éclairage naturel selon l'une des revendications 1 à 3, caractérisé par le fait que la plaque (17) fait partie d'un élément de paroi extérieure (10) d'un bâtiment et que l'élément de paroi extérieure présente, outre la partie (20) pourvue d'hologrammes (18), une fenêtre (15).

5. Dispositif d'éclairage naturel selon l'une des revendications 1 à 4, caractérisé par le fait que la plaque (17) fait partie d'un élément de paroi extérieure (10) d'un bâtiment et que l'élément de paroi extérieure présente, outre la partie (20) pourvue d'hologrammes (18), une seconde partie translucide (23) pour de la lumière diffuse qui n'est pourvue que d'éléments guides de lumière (24) pour la déviation en hauteur.

6. Dispositif d'éclairage naturel selon l'une des revendications 1 à 5, caractérisé par le fait que les éléments guides de lumière (21) sont commandés de telle manière que, en cas de lumière incidente diffuse, ils sont réglés sur un angle fixe, de sorte qu'ils guident la lumière incidente obliquement vers le haut.

7. Dispositif d'éclairage naturel selon l'une des revendications 1 à 6, caractérisé par le fait qu'une pièce (11) éclairée à travers la plaque (17) présente un plafond (30) à surfaces de réflexion (31) obliques qui réfléchissent la lumière reçue des éléments guides de lumière (21, 24) de manière sensiblement verticale.

8. Dispositif d'éclairage naturel selon l'une des revendications 1 à 7, caractérisé par le fait que les hologrammes (18) consistent en des plaques de zones qui sont réalisées par superposition d'un rayon à onde plane et d'un rayon à onde sphérique ou cylindrique.

9. Dispositif d'éclairage naturel selon l'une des revendications 1 à 7, caractérisé par le fait que les hologrammes (18) sont des plaques de zones cylindriques qui sont réalisées par superposition de plusieurs ondes cylindriques arrivant selon des angles différents.

10. Dispositif d'éclairage naturel selon l'une des revendications 1 à 7, caractérisé par le fait que les éléments guides de lumière se présentent sous forme de diffuseurs de lumière.

11. Dispositif d'éclairage naturel selon la revendication 10, caractérisé par le fait que les éléments guides de lumière sont des corps conducteurs de la lumière en arc (21a) dont la surface d'entrée de lumière (40) s'étendant à angle droit par rapport aux parois latérales (42) et la surface de sortie de lumière (41) s'étendent selon un angle différent de zéro l'une par rapport à l'autre.
